# EUROPÄISCHE PATENTSCHRIFT

(11) **EP 4 222 367 B1**
(45) Veröffentlichungstag und Bekanntmachung des Hinweises auf die Patenterteilung: **02.10.2024**
(21) Anmeldenummer: 21758083.6
(22) Anmeldetag: 04.08.2021
(51) Int. Cl.: F02M 25/08, F04F 5/46

(54) **FAHRZEUGANTRIEB MIT VAKUUMSYSTEM UND EJEKTOR**
VEHICLE DRIVE COMPRISING VACUUM SYSTEM AND EJECTOR
ENTRAÎNEMENT DE VÉHICULE COMPRENANT UN CIRCUIT DE DÉPRESSION ET UN ÉJECTEUR

(30) Priorität: 30.09.2020 DE 102020125565
(43) Veröffentlichungstag der Anmeldung: 09.08.2023
(73) Patentinhaber: NORMA Germany GmbH, 63477 Maintal (DE)
(72) Erfinder: KINTEA, Daniel, 63477 Maintal (DE); GABRYS, Lukasz, 42-436 Pilica (PL); SAJDAK, Michal, 42-436 Pilica (PL); VON BREITENBACH, Gerrit, 63477 Maintal (DE); SZWAJKOSZ, Janusz, 42-436 Pilica (PL)
(74) Vertreter: Patentanwälte Olbricht Buchhold Keulertz
(86) Internationale Anmeldenummer: PCT/EP2021/071799
(87) Internationale Veröffentlichungsnummer: WO 2022/069099

(56) Entgegenhaltungen:
- DE-U1- 202008 018 127
- US-A1- 2007 256 420
- US-A1- 2019 048 830

## Beschreibung

Die Erfindung betrifft einen Fahrzeugantrieb mit einem Vakuumsystem für ein Fahrzeug mit Verbrennungsmotor gemäß dem Oberbegriff von Anspruch 1.

Zur Verbesserung von Emissionswerten ist es im Fahrzeugbau möglich, Motorgehäuse, Kurbelgehäuse, Getriebegehäuse und Kraftstofftanks aktiv zu entlüften und die Gase direkt oder indirekt einer Reinigungseinrichtung zuzuführen. Reinigungseinrichtungen können Filter, Katalysatoren und der Abgasstrang sein, der final ebenfalls durch Filter und Katalysatoren gereinigt wird. Dabei kann die Entlüftung mittels einer Strahlpumpe, insbesondere einem Ejektor, erfolgen. Diese nutzt einen Primärgasstrom, bspw. eines Turboladers, der mittels einer Düse das Entlüftungsgas aus dem Motorgehäuse, Kurbelgehäuse, Getriebegehäuse oder Kraftstofftank ansaugt. Als Ejektor wird üblicherweise eine Strahlpumpe bezeichnet, die einen Unterdruck erzeugt, also eine vorwiegend absaugende Wirkung hat.

Wie beispielsweise DE 20 2013 104 001 U1 weiter ausführt, wird Unterdruck bzw. ein Vakuum auch für andere Aktoren im Fahrzeug als Antriebskraft genutzt. Zum Beispiel kann ein Unterdruck zum Assistieren eines Fahrers beim Anwenden der Fahrzeugbremsen verwendet werden. Gemäß DE 20 2013 104 001 U1 kann den Aktoren als Unterdruckquelle ein Motoreinlasskrümmer, eine Vakuumpumpe oder eben einen Ejektor dienen. Ein Ejektor liefert Vakuum durch Bereitstellen eines Niederdruckbereichs in einem Strömungsweg eines Betriebsfluids, das insbesondere auch Kraftstoffdämpfe oder unbehandelte Motoremissionen enthalten kann. Andere Ejektoren sind aus US 2019/048830 A1 und US 2007/256420 A1 bekannt.

Bei einem Ejektor tritt das Betriebsfluid mit hoher Geschwindigkeit aus einer Treibdüse in eine Mischkammer aus. Hierbei entsteht gemäß dem Gesetz von Bernoulli ein dynamischer Druckabfall. Aus diesem Grund ist der Druck in der Strömung geringer als der Normaldruck. Bei kompressiblen Treibmitteln, insbesondere Gasen oder Dämpfen ist die Treibdüse zur Maximierung der Geschwindigkeit häufig als Lavaldüse ausgebildet und der Treibstrahl tritt mit Überschall aus. In der Mischkammer trifft der Treibstrahl des Betriebsfluids auf das hier befindliche Saugmedium. Nach Austritt aus der Düse entstehen durch innere Reibung und Turbulenzen Scherspannungen in der Grenzschicht zwischen dem schnellen Betriebsfluid und dem wesentlich langsameren Saugmedium. Diese Spannung bewirkt eine Impulsübertragung, sodass das Saugmedium beschleunigt und mitgerissen wird. Dies bedingt, dass das Saugmedium einem Druckabfall unterliegt, dessen Saugwirkung dazu genutzt werden kann über einen Saugstutzen weiteres Saugmedium in die Mischkammer zu saugen. Für einen weiteren Druckanstieg lässt sich der Mischkammer ein Diffusor nachschalten.

Diese den Ausgang der Erfindung bildenden Funktionen und Merkmale können auch jeweils der technisch weitergebildeten Erfindung dieser Anmeldung innewohnen.

Nachteilhaft am Stand der Technik ist, dass die Turbulenzen zwischen dem Betriebsfluid und dem Saugmedium große Druckverluste verursachen und eine geringe Effizienz aufweisen. Bei turbogeladenen Motoren wird so ein signifikanter Anteil der turboverdichteten Druckluft abgezweigt, um als Betriebsfluid eines Ejektors genutzt zu werden. Damit ist die Effizienz des Motors in Summe beeinträchtigt. Ein weiterer Nachteil der Turbulenzen ist eine resultierende hohe Lautstärke.

Aufgabe der Erfindung ist es daher, einen Fahrzeugantrieb mit einem Vakuumsystem für ein Fahrzeug bereitzustellen, der eine hohe Effizienz bei geringer Geräuschentwicklung aufweist. Die Lösung soll zuverlässig funktionieren und kostengünstig sein.

Hauptmerkmale der Erfindung sind im kennzeichnenden Teil von Anspruch 1 angegeben. Ausgestaltungen sind Gegenstand der Ansprüche 2 bis 14.

Die Erfindung betrifft einen Fahrzeugantrieb mit einem Vakuumsystem für ein Fahrzeug, mit einem Verbrennungsmotor, der mit einer Zuluftleitung und einer Abluftleitung verbunden ist. Das Vakuumsystem weist einen Ejektor auf, wobei eine Treibgasleitung in einen Düsenkanal einer Treibdüse des Ejektors einmündet. Der Düsenkanal mündet durch eine Düsenöffnung in eine Mischkammer des Ejektors ein. Zusätzlich mündet eine Saugleitung in die Mischkammer ein und die Mischkammer mündet ausgangsseitig unmittelbar oder mittelbar, insbesondere mittelbar über einen Diffusor, in eine Mischgasleitung. Die Mischgasleitung wiederum mündet in die Zuluftleitung. Dabei ist die Saugleitung an einen Unterdruckverbraucher angeschlossen. Erfindungsgemäß ist die Düsenöffnung der Treibdüse durch einen Düsenrand mit Zacken und/oder Wellen ausgebildet.

Vorteilhaft hieran ist, dass die Zacken und/oder Wellen die Turbulenzen reduzieren, wobei die Abrisskante zwischen Treibgas und Saugmedium verlängert ist gegenüber einem kreisrunden Düsenrand. Dies erhöht die Effizienz des Ejektors und sofern der Durchsatz an Treibgas auf das nunmehr notwendige Maß reduziert wird auch die Effizienz des Fahrzeugantriebs. Außerdem reduzieren die Zacken und/oder Wellen durch Reduktion der Turbulenzen auch die Entstehung von Geräuschen. Maßnahmen zur aktiven und passiven Geräuschminimierung sind weniger erforderlich, was aufgrund von Gewichtsersparnissen zusätzlich die Effizienz des Fahrzeugs erhöht. Dabei sollte die Mischgasleitung in Strömungsrichtung des Düsenkanals fluchtend zur Düsenöffnung aus der Mischkammer ausmünden. Der Düsenkanal ist bevorzugt mit kreisförmigem Innenquerschnitt ausgebildet, weiter bevorzugt die Treibdüse zumindest im Bereich der Düsenöffnung ebenfalls mit kreisförmigem Außenquerschnitt. Als Zacken sollen insbesondere Varianten verstanden werden, die im Wesentlichen lineare Flanken aufweisen, bspw. Dreiecksfunktionen, Sägezahnfunktionen und Rechteckfunktionen. Varianten mit Radien auf den Ecken sollen hiervon jedoch nicht ausgeschlossen sein. Unter Wellen sind insbesondere solche Geometrien zu verstehen, die zumindest im Wesentlichen kontinuierliche Übergänge aufweisen, bspw. Sinuswellenformen.

Gemäß einer besonderen Ausführungsform sind die Zacken und/oder Wellen des Düsenrandes auf der Innenseite und/oder der Außenseite der Treibdüse angeordnet. So ist denkbar, dass die Zacken und/oder Wellen nur nach innen weisen, die Treibdüse auf der Außenseite jedoch eine glatte Oberfläche aufweist. Im umgekehrten optionalen Fall weisen die Wellen und/oder Zacken nur nach außen und die Innenfläche der Treibdüse ist glatt. Als dritte Option können die Zacken und/oder Wellen fächerartig ausgestaltet sein, sodass sie nach innen und außen weisend ausgebildet sind. Zusätzlich kann diese eher radiale Ausrichtung der Zacken und/oder Wellen auch in Strömungsrichtung des Düsenkanals weisend ausgeprägt sein.

Bei einem bevorzugten Design weisen die Zacken und/oder Wellen des Düsenrandes zumindest im Wesentlichen in Strömungsrichtung des Düsenkanals. Soweit der Düsenkanal einen kreisförmigen Innenquerschnitt hat, so ist auch die Projektion des Düsenrandes im Wesentlichen kreisförmig. Dieses Design ist wenig komplex und vergleichsweise kostengünstig herstellbar.

Gemäß einer besonderen Ausführungsform des Fahrzeugantriebs ist der Unterdruckverbraucher aus der Gruppe Unterdruckverteiler, Aktor, Stellglied und Entlüftungshohlraum, insbesondere aus der Entlüftungshohlraumgruppe Motorgehäuse, Kurbelgehäuse, Getriebegehäuse und Kraftstofftank. Diese Unterdruckverbraucher werden nunmehr effizient mit Unterdruck versorgt.

In einer näheren Ausgestaltung des Fahrzeugantriebs ist die Treibgasleitung in Strömungsrichtung hinter der Mischgasleitung von der Zuluftleitung, dem Verbrennungsmotor oder der Abluftleitung abgezweigt. Damit gelingt eine Bereitstellung des Treibgasstroms ohne großen Aufwand.

Optional kann der Düsenkanal im Bereich der Düsenöffnung eine zumindest im Wesentlichen zylindrische Innenwandung aufweisen. Dabei erstrecken sich die Zacken und/oder Wellen beispielsweise zumindest im Wesentlichen parallel zur Strömungsrichtung.

Im Speziellen bietet sich eine Ausgestaltung an, gemäß der die Zacken und/oder Wellen des Düsenrandes in Richtung des Zentrums der Düsenöffnung geneigt ausgerichtet sind, insbesondere zwischen 0°und 35°. Hierdurch kämmen sie gewissermaßen leicht durch den äußeren Bereich des Betriebsfluidstroms, was die geräuscharme Ansaugleistung des Saugmediums verbessert. Alternativ kommt auch eine Ausgestaltung in Betracht, gemäß der die Zacken und/oder Wellen des Düsenrandes in Richtung weg vom Zentrum der Düsenöffnung geneigt ausgerichtet sind, vorzugsweise zwischen 0° und 60°. Diese Alternative ist besonders gut mit einer als Laval-Düse ausgestalteten Treibdüse kombinierbar.

In einer Variante ragen die Zacken und/oder Wellen des Düsenrandes in die Mischkammer, dies insbesondere frei. Damit kann das Saugmedium effizient ohne Verwirbelungen in Strömungsrichtung des Betriebsfluids auf der Außenseite der Zacken und/oder Wellen an den Düsenrand heran strömen.

Weiterhin ist eine Ausgestaltung besonders effizient, bei der eine Einströmrichtung der Saugleitung in die Mischkammer zumindest im Wesentlichen parallel zum Düsenkanal ausgerichtet ist. Dann muss das Saugmedium keine Richtungsänderung vollziehen.

Entsprechend resultieren aus den gleichgerichteten Einzelströmen weniger Verwirbelungen bei der Zusammenführung an dem Düsenrand.

Die Zacken und/oder Wellen sollten insbesondere über den Umfang regelmäßig bzw. gleichmäßig verteilt angeordnet sein. Dies resultiert in einheitlichen Verwirbelungen über dem Umfang. In einer optionalen Ausführungsvariante sind die Zacken und/oder Wellen des Düsenrandes sinusförmig oder dreiecksfunktionsförmig ausgebildet.

Im Speziellen ist es hinsichtlich der Turbulenzenreduktion vorteilhaft, wenn die Täler der Zacken und/oder Wellen stumpfer ausgebildet sind als die Spitzen der Zacken und/oder Wellen.

Gemäß einer Variante sind die Zacken und/oder Wellen des Düsenrandes zumindest im Wesentlichen zweidimensional ausgebildet, vorzugsweise zumindest im Wesentlichen in Strömungsrichtung des Düsenkanals weisend, sodass die Projektion des Düsenrandes zumindest im Wesentlichen kreisförmig ist. Eine solche Form ist vergleichsweise kostengünstig herstellbar, insbesondere indem die Zacken und/oder Wellen als zweidimensionale Schnitt- oder Formlinie ausgebildet sind.

In einer abweichenden Variante sind die Zacken und/oder Wellen des Düsenrandes dreidimensional ausgebildet, dies insbesondere zumindest im Wesentlichen in Strömungsrichtung des Düsenkanals weisend sowie zumindest im Wesentlichen quer zur Strömungsrichtung des Düsenkanals weisend, sodass die Projektion des Düsenrandes einen welligen oder sternförmigen Umfang aufweist. Hierdurch wird das Betriebsfluid auf der Innenseite linear kanalisiert und die Länge des Düsenrandes ist durch die dreidimensionale Gestalt besonders lang. Gleichsam können auf der Außenseite der Treibdüse ausgebildete Zacken und/oder Wellen die Zuleitung des Saugmediums an den Düsenrand linear kanalisieren.

Grundsätzlich besteht die Option, dass in der Düsenöffnung keine Düsenspitze angeordnet ist. Dies ist konstruktiv einfach umsetzbar, insbesondere bei kleinen Ausführungsformen, wie sie in Fahrzeugen oft genügen.

Alternativ kann in der Düsenöffnung eine Düsenspitze angeordnet sein, insbesondere derart, dass ein Ringspalt zwischen der Düsenöffnung und der Düsenspitze ausgebildet ist. Hierdurch kann das Verhältnis zwischen Länge des Düsenrandes zum Volumenstrom des Betriebsfluids erhöht werden. Die Vermengung und das Mitreißen des Saugmediums gelingt nämlich im Wesentlichen am äußeren Umfang des Betriebsfluidstrahls. Zusätzlich wird durch die Düsenspitze eine Art Windschatten erzeugt, der hinter dem Düsenrand einen Sog ins Zentrum des Betriebsfluidstrahls verursacht, der auch das Saugmedium erfasst.

Der Ejektor kann auch als solches, also isoliert vom Rest des Fahrzeugantriebs, und mit seinen verschiedenen optionalen Ausgestaltungen ein erfindungsgemäßer Gegenstand sein. Zum Ejektor können dann die jeweils obligatorischen oder optionalen Bauteile gemäß den Bezugsziffern 11 bis 29 gehören, wobei an die Stelle der Treibgasleitung ein Treibgasleitungsanschluss des Ejektors und an die Stelle der Mischgasleitung ein Mischgasleitungsanschluss des Ejektors treten.

Bei einer besonderen Ausgestaltung des Fahrzeugantriebs ist in der Zuluftleitung ein Verdichter, insbesondere ein (Abgas-)Turbolader oder Kompressor, angeordnet, wobei die Mischgasleitung in Strömungsrichtung vor dem Verdichter in die Zuluftleitung mündet, und wobei die Treibgasleitung in Strömungsrichtung hinter dem Verdichter von der Zuluftleitung, dem Verbrennungsmotor oder der Abluftleitung abgezweigt ist. Entsprechend ist der Gegendruck von der Zuluftleitung gering, was in einer hohen Effizienz bei dem Ansaugen des Saugmediums resultiert. Zusätzlich wird direkt das Druckgefälle über dem Verdichter zur Bereitstellung des Betriebsmediums genutzt.

Des Weiteren besteht die Option, dass in der Zuluftleitung ein Luftfilter angeordnet ist, wobei die Mischgasleitung in Strömungsrichtung hinter dem Luftfilter in die Zuluftleitung mündet, und wobei die Treibgasleitung in Strömungsrichtung hinter der einmündenden Mischgasleitung von der Zuluftleitung, dem Verbrennungsmotor oder der Abluftleitung abgezweigt ist. Schädliche Gase und Aerosole werden so sicher im Kreislauf gehalten und können auch nicht den Luftfilter verschmutzen, bspw. durch Öle.

Fernerhin besteht die Option, dass in der Zuluftleitung ein Ladeluftkühler angeordnet ist, wobei die Mischgasleitung in Strömungsrichtung vor dem Ladeluftkühler in die Zuluftleitung mündet, und wobei die Treibgasleitung in Strömungsrichtung hinter der einmündenden Mischgasleitung und vor dem Ladeluftkühler von der Zuluftleitung abgezweigt ist. Damit kann der Ladeluftkühler kleiner ausgestaltet sein, denn er muss das Betriebsfluid nicht mit kühlen, sondern nur die restliche Luft, die zum Verbrennungsmotor geleitet wird.

Soweit vorhanden, bietet sich eine Ausgestaltung an, bei der in Strömungsrichtung der Zuluftleitung zunächst der Luftfilter, dann der Verdichter und hieran anschließend der Ladeluftkühler angeordnet sind.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: zeigt eine Schemaskizze eines Fahrzeugantriebs mit Vakuumsystem;
- Fig. 2: einen Längsschnitt durch einen Ejektor;
- Fig. 3a: einen Längsschnitt durch einen ersten Typ eines Düsenrandes einer Treibdüse;
- Fig. 3b: einen Längsschnitt durch einen zweiten Typ eines Düsenrandes einer Treibdüse;
- Fig. 4a: eine Detailansicht eines ersten Typs eines Düsenrandes einer Treibdüse; und
- Fig. 4b: eine Detailansicht eines zweiten Typs eines Düsenrandes einer Treibdüse.

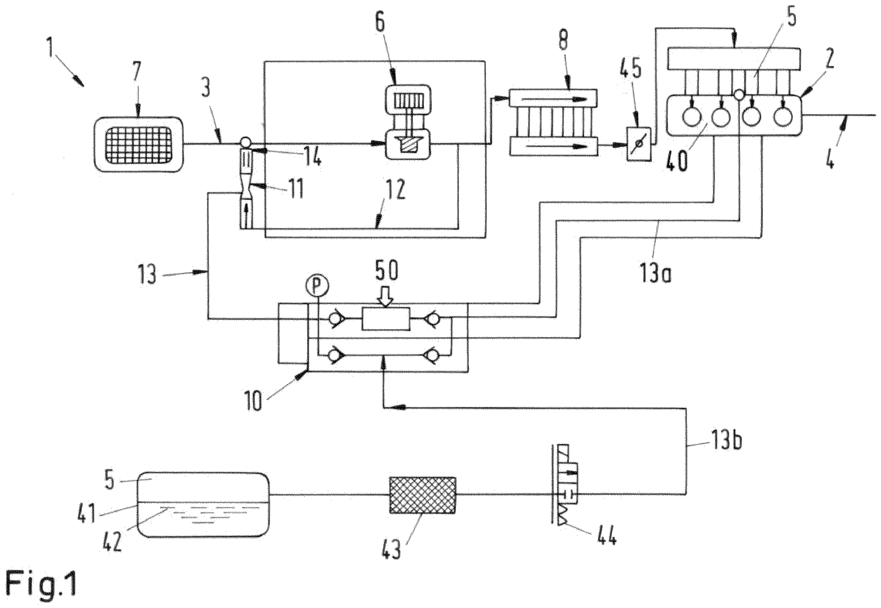

Fig. 1 zeigt eine Schemaskizze eines Fahrzeugantriebs 1 mit Vakuumsystem 10 für ein Fahrzeug. Dieser verfügt über einen Verbrennungsmotor 2 mit einer Zuluftleitung 3 und einer Abluftleitung 4. In der Zuluftleitung 3 sitzen in Strömungsrichtung hin zum Motor 2 zunächst ein Luftfilter 7, dann ein Verdichter 6, nämlich vorliegend ein Abgasturbolader, dann ein Ladeluftkühler 8, und hiernach eine Drosselklappe 45. Außerdem verfügt der Fahrzeugantrieb 1 über einen Tank 41, indem Kraftstoff 42 gespeichert ist, und in dem oberhalb des Kraftstoffes 42 ein Entlüftungshohlraum 5 ausgebildet ist. Auch der Verbrennungsmotor 2 weist einen Entlüftungshohlraum 5 auf, nämlich im Kurbelgehäuse 40.

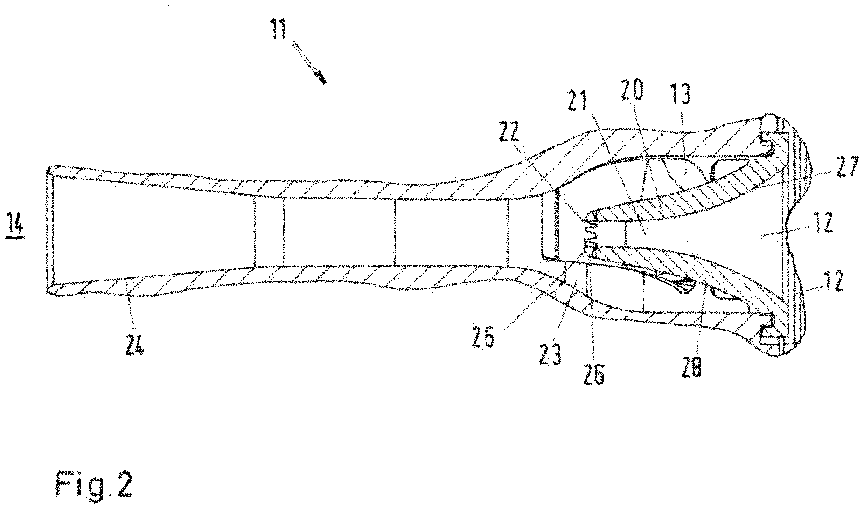

Das Vakuumsystem 10 weist einen Ejektor 11 auf. Eine Vergrößerung hiervon sieht man als Längsschnitt in Fig. 2. Kernelement von dem Ejektor 11 ist eine Treibdüse 20, die in eine Mischkammer 23 ragt. Eine Treibgasleitung 12 mündet in einen Düsenkanal 21 der Treibdüse 20. Durch den sich verjüngenden Querschnitt des Düsenkanals 21 wird das durch die Treibgasleitung 12 strömenden Betriebsfluid beschleunigt und tritt schließlich durch eine Düsenöffnung 22 in die Mischkammer 23 des Ejektors 11 ein. Zusätzlich ist eine Saugleitung 13 an die Mischkammer 23 angeschlossen. Ausgangsseitig schließt sich mittelbar über einen Diffusor 24 eine Mischgasleitung 14 an die Mischkammer 23 an. Der Diffusor 24 kann als Einzelbauteil oder als Teil des Ejektors 11 ausgebildet sein. Die Mischgasleitung 14 ist in Strömungsrichtung des Düsenkanals 21 fluchtend zur Düsenöffnung 22 angeordnet. Das gilt zumindest für den an die Mischkammer 23 bzw. den Diffusor 24 anschließenden Abschnitt.

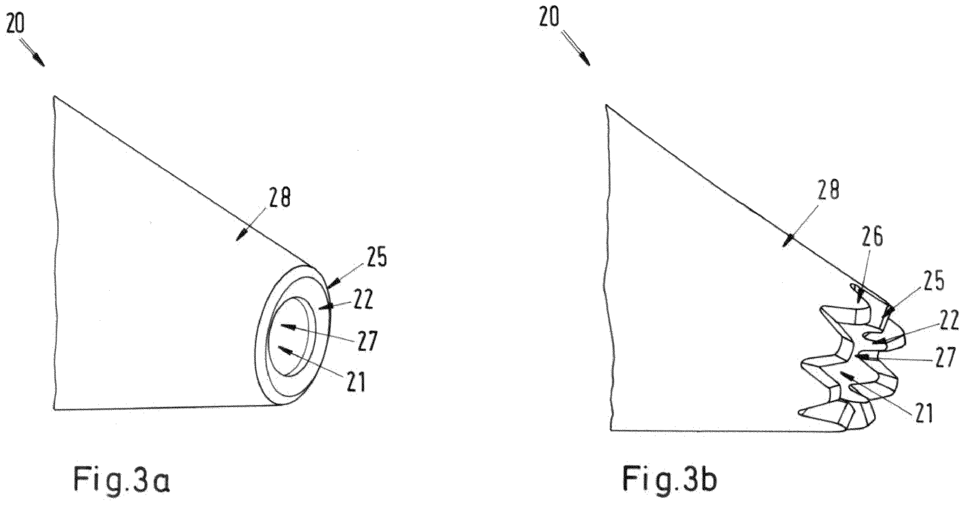

Die Düsenöffnung 22 der Treibdüse 20 ist durch einen Düsenrand 25 mit Zacken und/oder Wellen 26 ausgebildet, wie es im Detail in Fig. 3b dargestellt ist. In Fig. 3a ist eine Variante ohne solche Zacken und/oder Wellen 26 gezeigt. Erkennbar sind die Zacken und/oder Wellen 26 des Düsenrandes 25 sinusförmig ausgebildet, im Besonderen sind sie regelmäßig bzw. gleichmäßig über dem Umfang des Düsenrands 25 verteilt angeordnet. Außerdem ragen sie frei in die Mischkammer 23 (siehe Fig. 2).

Die Zacken und/oder Wellen 26 des Düsenrandes 25 sind gewissermaßen auf der Innenseite 27 und der Außenseite 28 der Treibdüse 20 angeordnet, denn sowohl das Betriebsmedium strömt auf der Innenseite 27 der Treibdüse 20 an diesen vorbei als auch das Saugfluid aus der Saugleitung 13 auf der Außenseite 28. Die Zacken und/oder Wellen 26 des Düsenrandes 25 weisen zumindest im Wesentlichen in Strömungsrichtung des Düsenkanals 21. Sie fluchten insbesondere mit der kegelförmigen Außenseite im vorderen Bereich der Treibdüse 20. Hierdurch sind die Zacken und/oder Wellen 26 des Düsenrandes 25 in Richtung des Zentrums der Düsenöffnung 22 geneigt ausgerichtet.

Vorliegend sind die Zacken und/oder Wellen 26 des Düsenrandes 25 zumindest im Wesentlichen zweidimensional ausgebildet, wobei sie zumindest im Wesentlichen in Strömungsrichtung des Düsenkanals 21 weisen. Eine Projektion des Düsenrandes 25 ist hierdurch zumindest im Wesentlichen kreisförmig. Durch die Neigung der Zacken und/oder Wellen 26 in Richtung Zentrum der Düsenöffnung 22 weist die Projektion jedoch eine leichte Welligkeit auf der Kreisbahn auf.

Optional könnten die Zacken und/oder Wellen 26 des Düsenrandes 25 auch dreidimensional ausgebildet sein, dies insbesondere indem sie zumindest im Wesentlichen in Strömungsrichtung des Düsenkanals 21 weisen wie in der zuvor beschriebenen Variante, und zusätzlich zumindest im Wesentlichen quer zur Strömungsrichtung des Düsenkanals 21 weisen. Die Projektion des Düsenrandes 25 hat hierdurch einen klar welligen oder sternförmigen Umfang. Technisch umsetzen lässt sich dies durch einen Zacken- bzw. Wellenschnitt des Düsenrandes 25 und einer zusätzlichen Berg- und Talstruktur in der Wandung der Treibdüse 20, nämlich auf deren Innenseite 27 und/oder Außenseite 28. Bildlich gesprochen würde dies einem Faltenfilter ähnelnd, dessen Öffnung zudem mit einer Zackenschere zugeschnitten ist.

In einer ersten Variante kann in der Düsenöffnung 22 - nicht dargestellt - eine Düsenspitze 29 derart angeordnet sein, dass ein Ringspalt zwischen der Düsenöffnung 22 bzw. dem Düsenrand 25 und der Düsenspitze 29 ausgebildet ist. Die Düsenspitze sitzt dann im Zentrum des Düsenkanals 21 und erstreckt sich bis in den Bereich der Düsenöffnung 22, vorzugsweise sogar ein Stück weit aus dieser heraus. Solch eine Düsenspitze kann beispielsweise mittels Stegen mit der Innenseite 27 der Treibdüse 20 verbunden sein.

In einer abweichenden und hier dargestellten Variante kann in der Düsenöffnung 22 jedoch auch keine solche Düsenspitze 29 angeordnet sein. Damit ist die Austrittsfläche der Düsenöffnung 22 vollflächig, anstatt wie mit einer Düsenspitze ringförmig.

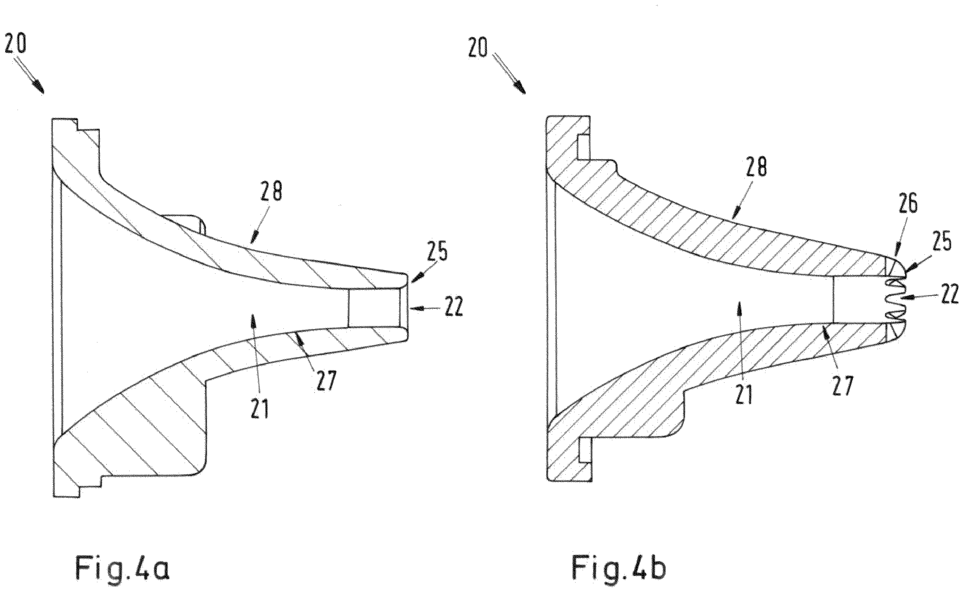

Den Längsschnitten durch je eine Treibdüse 20 der Fig. 4a und 4b lässt sich nochmals der Unterschied zwischen einer Treibdüse 20 ohne (Fig. 4a) und mit (Fig. 4b) Zacken und/oder Wellen 26 am Düsenrand 25 erkennen. Im Unterschied zu der Düsenöffnung 22 der Fig. 3a und 3b, die einem eher flachen kegelstumpfförmigen Spitzenabschnitt entmündet, ist die Variante nach den Fig. 4a und 4b spitzer ausgeführt. Das gilt vor allem für die Außenwandung 28. Die Innenwandung bildet den kleinsten Querschnitt sogar kurz vor der Düsenöffnung 22 aus. Von diesem kleinsten Querschnitt weitet sich die der Düsenkanal 21 in Richtung Düsenöffnung 22 bereits wieder auf, wenngleich nur geringfügig.

Eingebunden in den Fahrzeugantrieb 1 gemäß Fig. 1 ist der Ejektor 10 mit einer Treibdüse 20 gemäß den Fig. 3b oder 4b nunmehr derart, dass die Mischgasleitung 14 in die Zuluftleitung 3 des Verbrennungsmotors 5 mündet, nämlich zwischen dem Luftfilter 7 und dem Verdichter 6. Die Treibgasleitung 12 ist in Strömungsrichtung hinter der Mischgasleitung 14 von der Zuluftleitung 3 abgezweigt, nämlich zwischen dem Verdichter 6 und dem Ladeluftkühler 8.

Die Saugleitung 13 ist an einen Unterdruckverbraucher, nämlich einen Unterdruckverteiler 50 angeschlossen. Von diesem wiederum führt ein erster Zweig 13a der Saugleitung 13 zu dem Entlüftungshohlraum 5 im Kurbelgehäuse 40. Ein zweiter Zweig 13b der Saugleitung 13 führt vom Unterdruckverteiler 50 zum Entlüftungshohlraum 5 des Kraftstofftanks 41. In dem zweiten Zweig 13b sitzen in Strömungsrichtung zunächst ein Aktivkohlefilter 43 und dann ein elektrisch angesteuertes Ventil 44, mit dem der Entlüftungshohlraum 44 bedarfsgerecht entlüftet wird.

### Bezugszeichenliste

| | | | |
|---|---|---|---|
| 1 | Fahrzeugantrieb | 22 | Düsenöffnung |
| 2 | Verbrennungsmotor | 23 | Mischkammer |
| 3 | Zuluftleitung | 24 | Diffusor |
| 4 | Abluftleitung | 25 | Düsenrand |
| 5 | Entlüftungshohlraum | 26 | Zacke oder Welle |
| 6 | Verdichter | 27 | Innenseite |
| 7 | Luftfilter | 28 | Außenseite |
| 8 | Ladeluftkühler | | |
| | | 40 | Kurbelgehäuse |
| 10 | Vakuumsystem | 41 | Kraftstofftank |
| 11 | Ejektor | 42 | Kraftstoff |
| 12 | Treibgasleitung | 43 | Aktivkohlefilter/Ölabscheider |
| 13 | Saugleitung | 44 | Ventil |
| 13a | Saugleitung zum Kurbelgehäuse | 45 | Drosselklappe |
| 13b | Saugleitung zum Tank | | |
| 14 | Mischgasleitung | 50 | Unterdruckverteiler |
| 20 | Treibdüse | | |
| 21 | Düsenkanal | | |

## Patentansprüche

1. **Fahrzeugantrieb** (1) mit einem Vakuumsystem (10) für ein Fahrzeug, mit einem Verbrennungsmotor (2), der mit einer Zuluftleitung (3) und einer Abluftleitung (4) verbunden ist,
- wobei das Vakuumsystem (10) einen Ejektor (11) aufweist,
- wobei eine Treibgasleitung (12) in einen Düsenkanal (21) einer Treibdüse (20) des Ejektors (11) einmündet,
- wobei der Düsenkanal (21) durch eine Düsenöffnung (22) in eine Mischkammer (23) des Ejektors (11) einmündet,
- wobei eine Saugleitung (13) in die Mischkammer (23) einmündet und die Mischkammer (23) ausgangsseitig unmittelbar oder mittelbar in eine Mischgasleitung (14) mündet, und
- wobei die Mischgasleitung (14) in die Zuluftleitung (3) mündet,
- wobei die Saugleitung (13) an einen Unterdruckverbraucher angeschlossen ist,
**dadurch gekennzeichnet, dass**
- die Düsenöffnung (22) der Treibdüse (20) durch einen Düsenrand (25) mit Zacken und/oder Wellen (26) ausgebildet ist.

2. Fahrzeugantrieb (1) gemäß Anspruch 1, **dadurch gekennzeichnet, dass** die Zacken und/oder Wellen (26) des Düsenrandes (25) auf der Innenseite (27) und/oder der Außenseite (28) der Treibdüse (20) angeordnet sind.

3. Fahrzeugantrieb (1) gemäß einem der Ansprüche 1 oder 2, **dadurch gekennzeichnet, dass** die Zacken und/oder Wellen (26) des Düsenrandes (25) zumindest im Wesentlichen in Strömungsrichtung des Düsenkanals (21) weisen.

4. Fahrzeugantrieb (1) gemäß einem der vorhergehenden Ansprüche, **dadurch gekennzeichnet, dass** die Treibgasleitung (12) in Strömungsrichtung hinter der Mischgasleitung (14) von der Zuluftleitung (3), dem Verbrennungsmotor (2) oder der Abluftleitung (4) abgezweigt ist.

5. Fahrzeugantrieb (1) gemäß einem der vorhergehenden Ansprüche, **dadurch gekennzeichnet, dass** der Unterdruckverbraucher aus der Gruppe Unterdruckverteiler, Aktor, Stellglied und Entlüftungshohlraum (5), insbesondere aus der Entlüftungshohlraumgruppe Motorgehäuse, Kurbelgehäuse, Getriebegehäuse und Kraftstofftank, ist.

6. Fahrzeugantrieb (1) gemäß einem der vorhergehenden Ansprüche, **dadurch gekennzeichnet, dass** die Zacken und/oder Wellen (26) des Düsenrandes (25) in Richtung des Zentrums der Düsenöffnung (22) geneigt ausgerichtet sind.

7. Fahrzeugantrieb (1) gemäß einem der vorhergehenden Ansprüche, **dadurch gekennzeichnet, dass** die Zacken und/oder Wellen (26) des Düsenrandes (25) in die Mischkammer (23) ragen.

8. Fahrzeugantrieb (1) gemäß einem der vorhergehenden Ansprüche, **dadurch gekennzeichnet, dass** die Zacken und/oder Wellen (26) des Düsenrandes (25) sinusförmig oder dreiecksfunktionsförmig ausgebildet sind.

9. Fahrzeugantrieb (1) gemäß einem der vorhergehenden Ansprüche, **dadurch gekennzeichnet, dass** die Zacken und/oder Wellen (26) des Düsenrandes (25) zumindest im Wesentlichen zweidimensional ausgebildet sind.

10. Fahrzeugantrieb (1) gemäß einem der Ansprüche 1 bis 8, **dadurch gekennzeichnet, dass** die Zacken und/oder Wellen (26) des Düsenrandes (25) dreidimensional ausgebildet sind.

11. Fahrzeugantrieb (1) gemäß einem der vorhergehenden Ansprüche, **dadurch gekennzeichnet, dass** in der Zuluftleitung (3) ein Verdichter (6) angeordnet ist,
wobei die Mischgasleitung (14) in Strömungsrichtung vor dem Verdichter (6) in die Zuluftleitung (3) mündet, und
wobei die Treibgasleitung (12) in Strömungsrichtung hinter dem Verdichter (6) von der Zuluftleitung (3), dem Verbrennungsmotor (2) oder der Abluftleitung (4) abgezweigt ist.

12. Fahrzeugantrieb (1) gemäß einem der vorhergehenden Ansprüche, **dadurch gekennzeichnet, dass** in der Zuluftleitung (3) ein Luftfilter (7) angeordnet ist,
wobei die Mischgasleitung (14) in Strömungsrichtung hinter dem Luftfilter (7) in die Zuluftleitung (3) mündet, und
wobei die Treibgasleitung (12) in Strömungsrichtung hinter der einmündenden Mischgasleitung (14) von der Zuluftleitung (3), dem Verbrennungsmotor (2) oder der Abluftleitung (4) abgezweigt ist.

13. Fahrzeugantrieb (1) gemäß einem der vorhergehenden Ansprüche, **dadurch gekennzeichnet, dass** in der Zuluftleitung (3) ein Ladeluftkühler (8) angeordnet ist,
wobei die Mischgasleitung (14) in Strömungsrichtung vor dem Ladeluftkühler (8) in die Zuluftleitung (3) mündet, und
wobei die Treibgasleitung (12) in Strömungsrichtung hinter der einmündenden Mischgasleitung (14) und vor dem Ladeluftkühler (8) von der Zuluftleitung (3) abgezweigt ist.

## Claims

1. **Vehicle drive** (1) with a vacuum system (10) for a vehicle, with an internal combustion engine (2) which is connected to an intake air line (3) and an outlet air line (4),
- the vacuum system (10) having an ejector (11),
- a propellant line (12) opening into a nozzle channel (21) of a drive nozzle (20) of the ejector (11),
- the nozzle channel (21) opening through a nozzle opening (22) into a mixing chamber (23) of the ejector (11),
- a suction line (13) opening into the mixing chamber (23), and the mixing chamber (23) opening on the outlet side directly or indirectly into a mixed gas line (14), and
- the mixed gas line (14) opening into the intake air line (3),
- the suction line (13) being connected to a vacuum consumer,
**characterized in that**
- the nozzle opening (22) of the drive nozzle (20) is configured by way of a nozzle edge (25) with serrations and/or undulations (26).

2. Vehicle drive (1) according to Claim 1, **characterized in that** the serrations and/or undulations (26) of the nozzle edge (25) are arranged on the inner side (27) and/or the outer side (28) of the drive nozzle (20) .

3. Vehicle drive (1) according to either of Claims 1 or 2, **characterized in that** the serrations and/or undulations (26) of the nozzle edge (25) point at least substantially in the flow direction of the nozzle channel (21) .

4. Vehicle drive (1) according to one of the preceding claims, **characterized in that** the propellant line (12) is branched off from the intake air line (3), the internal combustion engine (2) or the outlet air line (4) downstream of the mixed gas line (14) in the flow direction.

5. Vehicle drive (1) according to one of the preceding claims, **characterized in that** the vacuum consumer is from the group comprising vacuum distributor, actuator, actuating element and ventilating cavity (5), in particular from the ventilating cavity group comprising engine housing, crankcase, transmission housing and fuel tank.

6. Vehicle drive (1) according to one of the preceding claims, **characterized in that** the serrations and/or undulations (26) of the nozzle edge (25) are oriented so as to be inclined in the direction of the center of the nozzle opening (22).

7. Vehicle drive (1) according to one of the preceding claims, **characterized in that** the serrations and/or undulations (26) of the nozzle edge (25) protrude into the mixing chamber (23).

8. Vehicle drive (1) according to one of the preceding claims, **characterized in that** the serrations and/or undulations (26) of the nozzle edge (25) are of sinusoidal or triangle function-shaped configuration.

9. Vehicle drive (1) according to one of the preceding claims, **characterized in that** the serrations and/or undulations (26) of the nozzle edge (25) are of at least substantially two-dimensional configuration.

10. Vehicle drive (1) according to one of Claims 1 to 8, **characterized in that** the serrations and/or undulations (26) of the nozzle edge (25) are of three-dimensional configuration.

11. Vehicle drive (1) according to one of the preceding claims, **characterized in that** a compressor (6) is arranged in the intake air line (3),
the mixed gas line (14) opening into the intake air line (3) upstream of the compressor (6) in the flow direction, and
the propellant line (12) being branched off from the intake air line (3), the internal combustion engine (2) or the outlet air line (4) downstream of the compressor (6) in the flow direction.

12. Vehicle drive (1) according to one of the preceding claims, **characterized in that** an air filter (7) is arranged in the intake air line (3),
the mixed gas line (14) opening into the intake air line (3) downstream of the air filter (7) in the flow direction, and
the propellant line (12) being branched off from the intake air line (3), the internal combustion engine (2) or the outlet air line (4) downstream of the opening mixed gas line (14) in the flow direction.

13. Vehicle drive (1) according to one of the preceding claims, **characterized in that** an intercooler (8) is arranged in the intake air line (3),
the mixed gas line (14) opening into the intake air line (3) upstream of the intercooler (8) in the flow direction, and
the propellant line (12) being branched off from the intake air line (3) downstream of the opening mixed gas line (14) and upstream of the intercooler (8) in the flow direction.

## Revendications

1. Entraînement de véhicule (1) avec un système de vide (10) pour un véhicule, avec un moteur à combustion interne (2) qui est relié à une conduite d'arrivée d'air (3) et à une conduite d'évacuation d'air (4),
- le système de vide (10) présentant un éjecteur (11),
- une conduite de gaz propulseur (12) débouchant dans un canal de buse (21) d'une buse de propulsion (20) de l'éjecteur (11),
- le canal de buse (21) débouchant à travers une ouverture de buse (22) dans une chambre de mélange (23) de l'éjecteur (11),
- une conduite d'aspiration (13) débouchant dans la chambre de mélange (23) et la chambre de mélange (23) débouchant côté sortie directement ou indirectement dans une conduite de gaz mixte (14), et
- la conduite de gaz mixte (14) débouchant dans la conduite d'arrivée d'air (3),
- la conduite d'aspiration (13) étant raccordée à un consommateur de dépression,
**caractérisé en ce que**
- l'ouverture de buse (22) de la buse de propulsion (20) est réalisée par un bord de buse (25) avec des dents et/ou des ondulations (26).

2. Entraînement de véhicule (1) selon la revendication 1, **caractérisé en ce que** les dents et/ou les ondulations (26) du bord de buse (25) sont agencées sur le côté intérieur (27) et/ou le côté extérieur (28) de la buse de propulsion (20).

3. Entraînement de véhicule (1) selon l'une quelconque des revendications 1 ou 2, **caractérisé en ce que** les dents et/ou les ondulations (26) du bord de buse (25) sont orientées au moins essentiellement dans la direction d'écoulement du canal de buse (21).

4. Entraînement de véhicule (1) selon l'une quelconque des revendications précédentes, **caractérisé en ce que** la conduite de gaz propulseur (12) est dérivée de la conduite d'arrivée d'air (3), du moteur à combustion interne (2) ou de la conduite d'évacuation d'air (4) dans la direction d'écoulement après la conduite de gaz mixte (14) .

5. Entraînement de véhicule (1) selon l'une quelconque des revendications précédentes, **caractérisé en ce que** le consommateur de dépression est du groupe comprenant un distributeur de dépression, un actionneur, un organe de commande et une cavité de ventilation (5), notamment du le groupe de la cavité de ventilation du carter moteur, du carter principal, du carter de transmission et du réservoir de carburant.

6. Entraînement de véhicule (1) selon l'une quelconque des revendications précédentes, **caractérisé en ce que** les dents et/ou les ondulations (26) du bord de buse (25) sont orientées de manière inclinée vers le centre de l'ouverture de buse (22).

7. Entraînement de véhicule (1) selon l'une quelconque des revendications précédentes, **caractérisé en ce que** les dents et/ou les ondulations (26) du bord de buse (25) font saillie dans la chambre de mélange (23).

8. Entraînement de véhicule (1) selon l'une quelconque des revendications précédentes, **caractérisé en ce que** les dents et/ou les ondulations (26) du bord de buse (25) sont réalisées sous forme sinusoïdale ou sous forme de fonction triangulaire.

9. Entraînement de véhicule (1) selon l'une quelconque des revendications précédentes, **caractérisé en ce que** les dents et/ou les ondulations (26) du bord de buse (25) sont réalisées au moins essentiellement sous forme bidimensionnelle.

10. Entraînement de véhicule (1) selon l'une quelconque des revendications 1 à 8, **caractérisé en ce que** les dents et/ou les ondulations (26) du bord de buse (25) sont réalisées sous forme tridimensionnelle.

11. Entraînement de véhicule (1) selon l'une quelconque des revendications précédentes, **caractérisé en ce qu'**un compresseur (6) est agencé dans la conduite d'arrivée d'air (3),
la conduite de gaz mixte (14) débouchant dans la conduite d'arrivée d'air (3) avant le compresseur (6) dans la direction d'écoulement, et
la conduite de gaz propulseur (12) étant dérivée de la conduite d'arrivée d'air (3), du moteur à combustion interne (2) ou de la conduite d'évacuation d'air (4) après le compresseur (6) dans la direction d'écoulement.

12. Entraînement de véhicule (1) selon l'une quelconque des revendications précédentes, **caractérisé en ce qu'**un filtre à air (7) est agencé dans la conduite d'arrivée d'air (3),
la conduite de gaz mixte (14) débouchant dans la conduite d'arrivée d'air (3) après le filtre à air (7) dans la direction d'écoulement, et
la conduite de gaz propulseur (12) étant dérivée de la conduite d'arrivée d'air (3), du moteur à combustion interne (2) ou de la conduite d'évacuation d'air (4) après la conduite de gaz mixte (14) débouchant dans la direction d'écoulement.

13. Entraînement de véhicule (1) selon l'une quelconque des revendications précédentes, **caractérisé en ce qu'**un refroidisseur d'air de suralimentation (8) est agencé dans la conduite d'arrivée d'air (3),
la conduite de gaz mixte (14) débouchant dans la conduite d'arrivée d'air (3) avant le refroidisseur d'air de suralimentation (8) dans la direction d'écoulement, et
la conduite de gaz propulseur (12) étant dérivée de la conduite d'arrivée d'air (3) après la conduite de gaz mixte (14) débouchant dans la direction d'écoulement et avant le refroidisseur d'air de suralimentation (8).
